# EUROPÄISCHE PATENTSCHRIFT

(11) **EP 0 601 215 B1**
(45) Veröffentlichungstag und Bekanntmachung des Hinweises auf die Patenterteilung: **02.11.1994**
(21) Anmeldenummer: 92119371.0
(22) Anmeldetag: 12.11.1992
(51) Int. Cl.: G01F 11/26

(54) **Dosier-Entnahmevorrichtung**
Dosing and withdrawing device
Dispositif de dosage et de prélèvement

(43) Veröffentlichungstag der Anmeldung: 15.06.1994
(73) Patentinhaber: MERZ + Co. GmbH & Co. KG, D-60318 Frankfurt (DE)
(72) Erfinder: Keil, Georg, W-6101 Gross-Bieberau (DE); Zulauf, Karl Heinz, W-6128 Höchst 2 (DE); Erlinghagen, Hartmut, W-6384 Schmitten/Ts. (DE)
(74) Vertreter: Leonhard, Frank Reimund, Dipl.-Ing.

(56) Entgegenhaltungen:
- EP-A- 0 285 466
- EP-A- 0 335 505
- US-A- 4 951 839

## Beschreibung

Die Erfindung betrifft eine Vorrichtung und ein Verfahren zur reproduzierbaren Entnahme einer einstellbaren, insbesondere kleinen, Menge einer Flüssigkeit oder eines Wirkstoffes aus einem Behälter, wie Glasfläschchen, nach dem Oberbegriff des Anspruchs 1 oder 17 (vgl.US 4,951,839, doct Fig 6).

In vielen Anwendungsbereichen ist es erforderlich, kleine Mengen eines flüssigen Wirkstoffes oder einer anderen Flüssigkeit aus einem Behältnis zu entnehmen, wobei die Entnahme leicht und bequem und ohne besondere Kenntnisse möglich und reproduzierbar sein soll. So ist es bekannt, Fläschchen für flüssige Arzneimittel oder Wirkstoffe mit einem in den Hals des Fläschchens eingesetzten Kopfmechanismus zu versehen, der einerseits das Austreten der Flüssigkeit in zählbaren Tropfen und andererseits das Eintreten von Luft in das Innere des Fläschchens steuert. Diese Dosiereinsätze erweisen sich in vielen Anwendungsbereichen als unbefriedigend, da sie den Inhalt des Fläschchens nur sehr zögerlich freigeben, was den Benutzer veranlaßt, den Tropfvorgang schüttelartig zu beschleunigen mit der Folge einer ungenauen Dosierung. In anderen Fällen wird die Flüssigkeit in einer so engen Tropfenfolge abgegeben, daß ein Mitzählen kaum möglich ist. In jedem Fall bedarf es einer besonderen Aufmerksamkeit des Benutzers. Hinzu kommt, daß bei etwas größeren Mengen der Entnahmevorgang relativ lange dauert.

Es ist **Aufgabe** hier Abhilfe zu schaffen und eine solche Vorrichtung zu schaffen, die eine leichte und genaue Einstellung kleinerer und größerer Mengen ebenso wie eine bequeme und rasche Entnahme ohne besondere Aufmerksamkeit des Benutzers möglich macht.

Diese Aufgabe wird durch die technische Lehre des Anspruchs 1, 17 bzw. 22 **gelöst**.

Gemäß dieser Lehre kann zunächst die mit dem Inneren des Behälters in freier Strömungsverbindung stehende Vorkammer gefüllt werden. Aus der Füllmenge der Vorkammer kann nunmehr die Meßkammer gefüllt werden. Die Meßkammer selber weist ein definiertes, jedoch veränderbares oder einstellbares Volumen auf. Das in der Meßkammer befindliche Flüssigkeitsvolumen kann dann auf bequeme Weise durch Öffnen des verschließbaren Auslasses entnommen werden. Die zu entnehmende Menge kann also auf bequeme Weise voreingestellt werden. Nach der Voreinstellung braucht der Benutzer auf die entnommene Menge nicht mehr zu achten, da er aufgrund der erfindungsgemäßen Lehre nur die voreingestellte Menge aus dem Meßvolumen entnehmen kann unabhängig davon, wie voll der mit der Vorrichtung versehene Behälter noch ist, und ohne die Gesamtvorrichtung von dem Flüssigkeits-Behälter abnehmen oder abschrauben zu müssen.

Die Vorrichtung erlaubt es, wie bisher, die Flüssigkeitsmenge aus dem Meßvolumen tröpfchenweise zu entnehmen oder aber in einem einzigen zusammenhängenden Fließvorgang (Anspruch 14).

Bei montierter Vorrichtung stehen das Innere des Behälters, die Vorkammer und die Meßkammer in freier Strömungsverbindung, wobei sie an einer gemeinsamen Überlaufkante aneinandergrenzen. Die Überlaufkante ist dabei an einem von zwei die Vorkammer und die Meßkammer begrenzenden und relativ zueinander verstellbaren Teilen vorgesehen.

Die Meßkammer und die Vorkammer können dabei so ausgebildet und in der Vorrichtung angeordnet sein, daß in der am Behälter montierten Stellung der Vorrichtung die Vorkammer aus dem Behälterinneren nur in einer annähernden Über-Kopf-Stellung des Behälters füllbar ist, während die Meßkammer aus der Vorkammer erst bei Rückführung des Behälters annähernd in die Normalstellung gefüllt wird. Die Einstellung des Volumens der Meßkammer erfolgt durch relative Bewegung der beiden, die Vorkammer und die Meßkammer begrenzenden Teile, wobei die Volumina bei Verstellung gegenläufig verändert werden. Über das Feindosiervolumen, das zwischen Meß- und Vorkammer angeordnet ist, wird die Meßkammer reproduzierbar - bis jeweils zur frei in die Vorkammer ragenden Überlaufkante - gefüllt.

Bevorzugt sind auch Mittel vorgesehen, um bei der Rückführung des Behälters aus der Über-Kopf-Stellung in die annähernde Normalstellung die in der Vorkammer befindliche Flüssigkeit oder dgl. bevorzugt in die Meßkammer zu leiten. Dadurch ist es möglich, auch kleine Restmengen an Flüssigkeit in dem Behälter zuverlässig und dosiert zu entnehmen (Anspruch 5).

Die Entnahme durch den Auslaß kann unter Pumpwirkung erfolgen.

Wenigstens die die Meßkammer und den Auslauf begrenzenden Teile können aus einem in Abhängigkeit von der Konsistenz der Flüssigkeit ausgewählten Werkstoff hergestellt werden oder mit einem solchen Werkstoff oberflächlich beschichtet sein, der das Haftungsvermögen der Flüssigkeit an den Oberflächen möglichst klein werden läßt.

Der Stand der Technik zeigt eine Vielzahl von Gestaltungsmöglichkeiten für eine Entnahmevorrichtung, mit der eine reproduzierbare, einstellbare, insbesondere kleine Menge einer Flüssigkeit aus einem Behälter, wie z.B. Glasfläschchen, entnommen werden kann. Bereits **die US-A 4,951,839** zeigt **sieben** verschiedene Ausführungsbeispiele von Dosierspendern der erwähnten Art. Insoweit mit der Erfindung gemäß den Ansprüchen 1 oder 17 vergleichbar als der Oberbegriff der Ansprüche angibt, ist die dortige Figur 6. Sie zeigt einen tassenförmig geformten Behälter (cup-shaped housing) mit zylindrischen Wänden, die über eine zylindrische Anbringungsvorrichtung mit einstellbaren Greifarmen (adjustable attachment arms) auf eine Vielzahl verschieden großer Behälterhälse aufsetzbar ist. In der erwähnten Tasse werden zwei Volumina A und B gebildet, und zwar durch eine Überlaufkante eines im wesentlichen zylindrisch gestalteten Akkordeon-Stutzens (accordeon-like sleeve), der am Boden des tassenförmigen Behälters befestigt ist. Durch die Akkordeon-Struktur kann die Oberkante in dem tassenförmigen Aufsetzbehälter so verschoben werden, daß sich die Volumina von A und B gegensinnig ändern. Ein flacher Schnappdeckel verschließt das obere Ende des tassenförmigen Behälters und kann geöffnet werden, so daß **nach Abnehmen** des Behälters und der Anbringungsvorrichtung von dem Flaschenhals die in dem Dosierraum B durch die eingestellte Höhenlage der Überlaufkante des Akkordeon-Stutzens dosierte Flüssigkeitsmenge ausgegossen oder ausgetrunken werden kann. Dazu muß die Tasse zum Ausgießen oder Austrinken der Dosiermenge häufig vom Behälterhals **entfernt werden**, durch welches häufige Abnehmen und Aufsetzen sich die Dichtung zwischen Behälterhals und Anbringungsvorrichtung verschlechtert. Eine bequeme und rasche Entnahme der dosierten Flüssigkeitsmenge und eine leichte und genaue Einstellung kleinerer und größerer Dosiermengen bei zur Neige gehendem Behälterinhalt ist nicht möglich.

Eine andere Ausführungsform einer Dosiervorrichtung zeigt **die EP-A 335 505**, die einen auf eine Flasche aufschraubbaren topfförmigen Behälter zeigt. Der topfförmige Behälter ist mit einem großen flachen Deckel abgedeckt, der eine Ausgießöffnung enthält. Die Dosierung erfolgt durch ein Höhenverändern einer kleinen Öffnung in der Mitte des Topfes. Die kleine Öffnung wird definiert von einem Längsschlitz in einem hohlzylindrischen Rohr, das auf einem ebenfalls zylindrischen Innenrohr mit spiralförmiger Öffnung drehbar gelagert ist. Zwischen Längsschlitz und spiralförmiger Öffnung bildet sich so ein im wesentlichen quadratisches Fenster, das durch Drehen des Flachdeckels vertikal verschoben werden kann und mit der zuvor erwähnten Überlaufkante des Akkordeon-Stutzens vergleichbar ist. Um allerdings sicherzustellen, daß bei Ausgießen der dosierten Flüssigkeit die genaue Dosierung beibehalten bleibt, **muß** die Flachabdeckung mit ihrem zylindrischen Hohlrohr in eine Schließposition verdreht werden, bevor die dosierte Flüssigkeit ausgegossen werden kann. Diese umständliche Handhabung vermeidet die Erfindung.

Die Vorteile des Verfahrens zum Betreiben bzw. Handhaben der als Entnahmeeinrichtunq ausgebildeten Vorrichtung sowie deren Herstellung werden in der nachfolgenden Figurenbeschreibung anhand von mehreren **Ausführungsbeispielen** herausgestellt.

In den Figuren zeigen:

**Figur 1** im senkrechten Schnitt eine Vorrichtung gemäß der Erfindung in dem an einem Behälter montierten Zustand.

**Figur 2** einen Querschnitt durch den oberen Bereich der Vorrichtung.

**Figur 3** in ähnlicher Darstellung wie Figur 1, jedoch im Ausschnitt eine abgewandelte Ausführungsform der Vorrichtung nach der Erfindung.

Die Vorrichtung gemäß der Erfindung zur reproduzierbaren Entnahme einer einstellbaren, insbesondere kleinen, Menge einer Flüssigkeit oder eines flüssigen Wirkstoffes aus einem Behälter ist überall da einsetzbar, wo das Erfordernis besteht, in reproduzierbarer Weise eine Flüssigkeit genau und rasch aus einem Behälter zu entnehmen. Ein weites Anwendungsfeld sind die sogenannten Tropfflaschen für Arzneimittel. Ein anderer Anwendungsbereich sind Flaschen oder Fläschchen für flüssige Gewürze oder flüssige Süßungsmittel oder auch Spirituosen bzw. Aromastoffe (Bitter Orange, Angostura). Ein weiterer Anwendungsbereich besteht in den Flaschen oder Fläschchen für flüssige Düngemittel. Die aufgezählten Anwendungsbereiche sind beispielhaft.

Die Vorrichtung kann auch vom Hersteller oder Abfüller her bleibend an dem Behälter vorgesehen sein. Die Vorrichtung kann aber auch abdichtend und leicht lösbar und auswechselbar für verschiedene Behälter wiederverwendbar ausgebildet sein.

Die Teile der Vorrichtung können aus verschiedenen Materialien hergestellt sein. Bevorzugt werden für bestimmte Bereiche solche Werkstoffe, die für die betreffende Flüssigkeit ein nur geringes Oberflächenhaftungsvermögen zeigen, um eine möglichst hohe Dosiergenauigkeit zu erhalten.

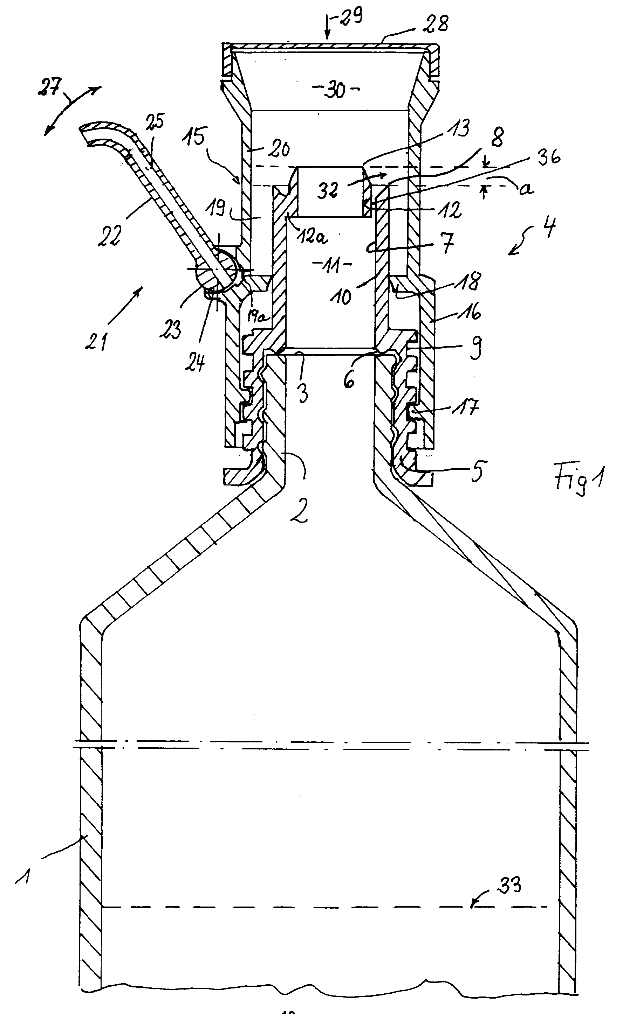

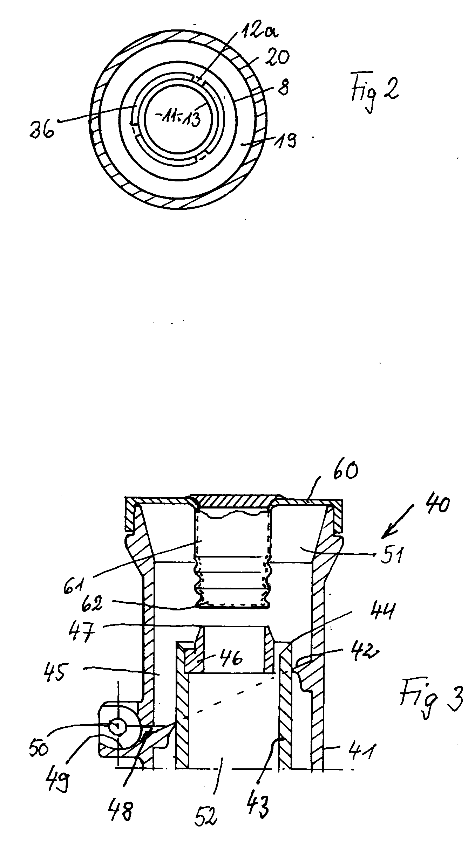

Bei dem Ausführungsbeispiel **nach Figur 1 und 2** ist ein Behälter 1 in Form eines Glasfläschchens gezeigt, welches an einem Behälterhals 2 eine Entnahmeöffnung und außen am Behälterhals ein Gewinde für eine Verschlußkappe des Behälters aufweist. Nach Abschrauben der Verschlußkappe kann mit dem Behälterhals die Entnahmevorrichtung 4 gemäß der Erfindung abdichtend verschraubt werden. Dazu ist ein rohrförmiger Innenteil 10 vorgesehen, der unter Bildung einer Schulter in einen im Durchmesser erweiterten Rohrabschnitt 5 übergeht, der ein dem Außengewinde des Behälterhalses 2 entsprechendes Innengewinde aufweist. In dem in Figur 1 dargestellten aufgeschraubten Zustand ist ein Dichtwulst 6 im Bereich der Schulter abdichtend auf die Stirnfläche 3 des Behälterhalses aufgedrückt; statt dessen kann auch ein Dichtelement im Schulterbereich eingebettet sein. Der Rohrabschnitt 5 weist ein Außengewinde auf, auf dem mit einem Gewindeeingriffselement 17 der untere Mantelabschnitt 16 eines kappenförmigen Teils 15 schraubbar ist, so daß die relative axiale Stellung der beiden Teile 10 und 15 verstellbar ist. Der kappenförmige Teil 15 weist einen Kappenboden 28 auf, der im dargestellten Beispiel als in Richtung des Pfeiles 29 elastisch verformbare Membran ausgebildet ist. Der obere Bereich 20 des Kappenmantels umgibt den rohrförmigen Innenteil 10 mit einem vorbestimmten radialen Abstand, wobei zwischen den beiden Bereichen eine Meßkammer 19 von veränderlichem Volumen begrenzt wird. Der rohrförmige Innenteil 10 ragt nach oben frei in den eine Vorkammer 30 begrenzenden kappenförmigen Teil 15 hinein und weist an seinem oberen Ende eine im dargestellten Beispiel schneidenförmig ausgebildete Überlaufkante 8 auf. Nach unten ist die Meßkammer 19 durch eine von der Innenseite des Kappenmantels 20 vorspringende ringförmige Bodenwand 18 begrenzt, deren radial innerer Bereich als Lippendichtung ausgebildet ist, welche gleitend, aber abdichtend an der Außenfläche des rohrförmigen Innenteils 10 angreift. Die Innenfläche 7 des Innenteils 10 begrenzt einen Einströmkanal 11, der in dem in Figur 1 gezeigten montierten Zustand in freier Strömungsverbindung mit der Behälterhalsöffnung steht und im wesentlichen den gleichen Innenquerschnitt aufweist wie diese Öffnung.

Am oberen Ende des rohrförmigen Innenteils 10 ist im dargestellten Beispiel mittels dreier oder mehrerer Stege 12a eine Buchse oder eine Hülse 12 gehalten, die einen kleineren Durchmesser als der Innenteil 10 aufweist, am oberen Ende eine weitere Überlaufkante 13 aufweist und die Überlaufkante 8 des Innenteils 10 um ein vorbestimmtes Maß a überragt. Die Anordnung ist so getroffen, daß zwischen dem Innenteil 10 und der Buchse 12 in den Raum 11 mündende Drosselkanäle 36 gebildet werden, welche aus dem Bereich zwischen den Überlaufkanten 8 und 13 ausgehen.

Unmittelbar über dem ringförmigen Bodenwandbereich 18 der Meßkammer 19 ist eine Auslaßöffnung 19a vorgesehen. Diese ist über ein in Figur 1 im Querschnitt gezeigtes walzenförmiges Ventil 23 verschließbar, wobei der walzenförmige Ventilteil in einer entsprechenden zylindrischen Ventilfläche 24 des kappenförmigen Teils 15 schwenkbar und abdichtend gelagert ist. Der walzenförmige Ventilteil 23 bildet das innere Ende einer schwenkbaren Ausgießtülle 22, die einen Auslaufkanal 25 aufweist und entsprechend dem Doppelpfeil 27 zwischen einer an den kappenförmigen Teil 15 angeklappten Schließstellung und einer gegenüber dem Kappenteil radial vorspringenden Entnahmestellung verschwenkbar ist. Diese soeben beschriebenen Teile bilden den verschließbaren Auslauf 21 der Meßkammer 19.

Es ist ersichtlich, daß das Volumen der Meßkammer 19 durch Drehen des kappenförmigen Teils 15 gegenüber dem rohrförmigen Innenteil 10 vergrößert und verkleinert werden kann, und zwar gegenläufig zu einer entsprechenden Verkleinerung bzw. Vergrößerung des Vorvolumens 30. Das zwischen den beiden im radialen und axialen Abstand a liegenden Überlaufkanten 8, 13 gebildete Teilvolumen ist ein Feinmeßvolumen 32, das zwischen der Meßkammer 19 und der Vorkammer 30 gebildet ist. Die Vorkammer steht über die Hülse oder die Buchse 12 in freier Strömungsverbindung mit dem Zulaufkanal 11 und damit mit dem Inneren des Behälters 1, 2. Die Meßkammer 19 steht mit der Vorkammer 30 über das Feinmeßvolumen 32 in Verbindung.

Nach Aufschrauben der Vorrichtung 4 auf den Behälter 1, 2 kann zunächst die gewünschte Größe des Meßvolumens 19 durch Verdrehen des kappenförmigen Teils 15 eingestellt werden. Eine nicht gezeigte, von außen sichtbare Skala kann das genaue und reproduzierbare Einstellen des Meßvolumens erleichtern.

Nach Einstellen des Meßvolumens 19 kann der Behälter annähernd in die Über-Kopf-Stellung geschwenkt werden wodurch Flüssigkeit aus dem Behälter unabhängig von der Flüssigkeitsstandhöhe 33 in die Vorkammer 30 einlaufen kann. Beim Zurückwenden des Behälters annähernd in die aufrechte Normalstellung fließt ein Teil der Flüssigkeit ungehindert zurück in den Behälter 1. Gleichzeitig wird durch den Aufrichtvorgang gewährleistet, daß ein ausreichender Anteil der Flüssigkeit in die Meßkammer 19 fließt.

Um sicherzustellen, daß die Meßkammer 19 gefüllt wird, sorgt das Feinmeßvolumen 32 für einen Vorrat an Flüssigkeit, der in das Behälterinnere nur verzögert, nämlich durch die Drosselkanäle 36 gelangen kann, so daß aus diesem Vorrat das Meßvolumen 19 bis zur Überlaufkante 8 aufgefüllt wird, der Rest des Feinmeßvolumens, der nicht zur Auffüllung des Meßkammer 19 benötigt wird, kehrt in den Behälter 1 zurück. In der aufrechten Stellung des Behälters kann nunmehr die Tülle 22 des Auslaufs 21 aus der angeklappten Schließstellung in die ausgeschwenkte Entnahmestellung geschwenkt werden, so daß die in der Meßkammer 19 vorhandene Flüssigkeit durch die Tülle 22 auslaufen kann.

Der Auslaufvorgang kann durch - gegebenenfalls wiederholten - Druck auf die den membranförmigen Kappenboden 28 unterstützt werden. Durch diese Pumpwirkung kann auch erreicht werden, daß an den die Meßkammer 19 begrenzenden Flächen oder dem Auslaufkanal 25 haftende Flüssigkeitströpfchen ausgetrieben werden. Durch gezieltes Betätigen des Kappenbodens 28 kann aber auch die in der Meßkammer 19 vorhandene Flüssigkeit tröpfchenweise entnommen werden.

Das Feindosiervolumen 32 gewährleistet, daß auch bei einer nur noch kleinen Restmenge in dem Behälter 1 diese zuverlässig in die Meßkammer 19 geleitet wird.

Es ist somit eine einfache restlose genaue und wiederholbare dosierte Entnahme einer voreinstellbaren Flüssigkeitsmenge aus dem Behälter möglich, ohne daß es eines besonderen Geschicks oder einer besonderen Aufmerksamkeit der Person bedarf.

Die Meßkammer 19 kannn statt ringförmig auch als zentral angeordnete oder gegenüber der Mitte versetzte Kammer ausgebildet sein. Die gezeigte Ausbildung erleichtert jedoch wesentlich die Herstellung und die Bedienung.

Statt des Schraubgewindes 9, 17 kann zur Verstellung des Meßvolumens auch nur ein einfacher Gleitsitz oder Schiebesitz des kappenförmigen Teils 15 auf dem Abschnitt 5 des rohrförmigen Innenteils 10 vorgesehen sein. Statt eines membranförmigen Kappenbodens 28 kann der obere Bereich oberhalb der Meßkammer 19 auch anderweitig elastisch zusammendrückbar ausgebildet sein. Dazu können zwei teleskopförmig zueinander verschiebliche, nach Art eines Pumpenkolbens wirkende Teile oder ein balgförmiger Mantelabschnitt am Teil 15 vorgesehen sein.

**Wie die Figur 3** zeigt, können anstelle oder zusätzlich zu der Hülse 12 Maßnahmen getroffen sein, um die Flüssigkeit nach dem Zurückführen des Behälters in die Normalstellung bevorzugt in die Meßkammer 45 zu leiten.

Eine Maßnahme besteht beispielsweise darin, mittig an dem starren oder bevorzugt membranartig verformbaren Kappenboden 60 einen Verdrängerkörper 61 anzuordnen, der entsprechend der ringförmigen Meßkammer 45 auch die Vorkammer 51 ringförmig gestaltet.

Ferner kann der Verdrängerkörper 61 auch als Verschlußteil ausgebildet sein, dessen in die Vorkammer ragende Stirnfläche bei Niederdrücken des membranförmigen Kappenbodens 60 die durch die Überlaufkante 47 der Buchse 46 gebildete Öffnung verschließt, solange der Behälter sich noch in der Über-Kopf-Stellung befindet. Wenn man nun den Behälter in die Normalstellung zurückführt und erst dann die Membran 60 wieder freigibt, ist gewährleistet, daß zunächst die Meßkammer 45 gefüllt ist, bevor Flüssigkeit einerseits gedrosselt durch die Drosselbohrungen zwischen Innenteil 43 und Buchse 46 bzw. frei durch die Innenöffnung der Buchse 46 nach Wiederanheben des Verschlußstopfens 62 in das Behälterinnere abfließen kann.

Um die Pumpwirkung mit Hilfe der Membran 60 nicht zu behindern, kann der als Verschlußkörper ausgebildete Verdrängungskörper 61 in seinem unteren Bereich 62 auch balgförmig - also nachgiebig - ausgebildet sein.

Der Verdrängerkörper 61 kann auch so ausgebildet werden, daß er den Innenraum 52 des Innenteils 43 bei Niederdrücken der Membran 60 verschließt.

Der ringförmige Bodenabschnitt 42 für die Meßkammer 45, der lippendicht mit dem Außenumfang des Innenteils 43 gleitend zusammenwirkt, kann, wie Figur 3 zeigt, von der Auslauföffnung 48 aus auch schräg ansteigend ausgebildet sein. Dadurch wird ohne Verringerung der radialen Weite das Volumen der Meßkammer entsprechend verkleinert und das Auslaufen der Flüssigkeit unterstützt. Figur 3 zeigt ferner die mit dem nicht dargestellten Ventilglied zusammenwirkende Ventilsitzfläche 49 und die Lagerung 50 für ein walzenförmiges Ventilglied.

Bei Anordnung oder Anformung eines Verdrängerkörpers 61 an den Kappenboden 60 kann das Innere des Verdrängerkörpers durch einen (nicht näher bezeichneten) Stopfen oder dgl. verschlossen werden.

## Patentansprüche

1. Vorrichtung zur reproduzierbaren Entnahme einer einstellbaren, insbesondere kleinen Menge einer Flüssigkeit aus einem Behälter (1), wie Glasfläschchen,
- mit einer mit dem Inneren des Behälters (1) in freier Strömungsverbindung stehenden Vorkammer (30;51);
- mit einer von dieser (30;51) strömungsmäßig abteilbaren Meßkammer (19;45) einstellbaren Volumens;
- mit einem verschließbaren Auslaß (21) zum Entleeren der Meßkammer (19;45);
- wobei die Volumina der Vorkammer (30;51) und der Meßkammer (19;45) durch relatives Verstellen zweier - die Vorkammer und die Meßkammer begrenzender - Teile (10,15;43,41) gegenläufig veränderbar sind;
- der eine (10;43) der beiden Teile (10,15;43,41) in montiertem Zustand der Vorrichtung mit dem Innern des Behälters (1) in freier Strömungsverbindung steht und an seinem (10;15) oberen Ende eine - frei in die Vorkammer (30;51) ragende - Überlaufkante (8;47) aufweist,
dadurch gekennzeichnet, daß
- der eine Teil ein rohrförmiges Innenteil (10,15) ist, das mit dem Behälter (1,2) in montierter Stellung abdichtend verbünden ist;
- zwischen Meßkammer (19;45) und Vorkammer (30;51) ein Feindosiervolumen (32) begrenzt ist, das zum Behälter (1) eine Strömungsverbindung aufweist zur verzögernden Rückkehr von Flüssigkeit;
- die eingestellte Flüssigkeitsmenge (19;45) ohne Demontage der Vorrichtung vom Behälter (1) über den verschließbaren Auslaß entnehmbar ist.

2. Vorrichtung nach Anspruch 1, dadurch gekennzeichnet, daß die Meßkammer (19) mit der Vorkammer (30) und dem Feindosiervolumen (32) in freier Strömungsverbindung steht.

3. Vorrichtung nach Anspruch 1 oder 2, dadurch gekennzeichnet, daß das Feindosiervolumen (32), die Vorkammer (30;51) und das Innenvolumen des Behälters (1) bei montierter Vorrichtung an der Überlaufkante (8;47) des einen (10,43) der relativ zueinander verstellbaren Teile (10,15;43,41) aneinandergrenzen.

4. Vorrichtung nach einem der Ansprüche 1 bis 3, dadurch gekennzeichnet, daß die Meßkammer (19;45) und die Vorkammer (30;51) so ausgebildet und in der Vorrichtung angeordnet sind, daß in der am Behälter montierten Vorrichtung die Vorkammer (30;51) aus dem Behälterinneren nur in einer der Überkopfstellung annähernden Stellung des Behälters (1,2) und die Meßkammer (19;45) aus der Vorkammer (30;51) bei Rückführung des Behälters (1,2) annähernd in die Normalstellung füllbar ist.

5. Vorrichtung nach Anspruch 4, dadurch gekennzeichnet, daß Mittel (12,13,36;46;60 bis 62) vorgesehen sind, um bei Rückführung des Behälters annähernd in die Normalstellung die Flüssigkeit bevorzugt in die Meßkammer (19;45) zu leiten.

6. Vorrichtung nach einem der Ansprüche 1 bis 5, dadurch gekennzeichnet, daß der eine (15) der beiden relativ zueinander verstellbaren Teile (10,15) den verschließbaren Auslaß (19a;48) und im Bereich des Auslasses ein die Meßkammer (19;45) nach unten begrenzendes und an dem anderen Teil (10;43) abdichtend und gleitend angreifendes Bodenelement (18;42) aufweist.

7. Vorrichtung nach Anspruch 6, dadurch gekennzeichnet, daß das Bodenelement (42) von der Auslaßstelle (48) aus schräg ansteigend verläuft.

8. Vorrichtung nach einem der vorhergehenden Ansprüche, dadurch gekennzeichnet, daß der andere Teil (15;41) der beiden relativ zueinander beweglichen Teile (10,15;43,41) ein den Innenteil mit radialem Abstand überragender kappenförmiger Teil mit Kappenboden (28) und Kappenmantel (20) ist, welcher gegenüber dem Innenteil (10) in axialer Richtung verstellbar ist.

9. Vorrichtung nach Anspruch 7, dadurch gekennzeichnet, daß der Überlaufkante (47) gegenüber ein in die Vorkammer (51) ragender Verdrängerkörper (61,62) am Kappenboden (60) angeordnet ist.

10. Vorrichtung nach einem der vorhergehenden Ansprüche, dadurch gekennzeichnet, daß der Kappenboden (28;60) flexibel ausgebildet ist.

11. Vorrichtung nach einem der vorhergehenden Ansprüche, dadurch gekennzeichnet, daß der Kappenboden als elastische Pumpmembran (28, 60) ausgebildet ist.

12. Vorrichtung nach den Ansprüchen 5 und 9 in Verbindung mit den Ansprüchen 10 oder 11, dadurch gekennzeichnet, daß der Verdrängerkörper (61) als - insbesondere elastisch verformbarer (62) - Schließkörper zum vorübergehenden Verschließen des die Überlaufkante (47) aufweisenden Endes des rohrförmigen Innenteils (43) ausgebildet ist.

13. Vorrichtung nach einem der vorhergehenden Ansprüche, dadurch gekennzeichnet, daß am oberen Ende des rohrförmigen Innenteils (10;43) eine - insbesondere auswechselbare - Hülse oder Büchse (12;46) vorgesehen ist, welche die Überlaufkante (8;44) des Innenteils (10;43) unter Bildung des Feindosiervolumens (32) um ein vorbestimmtes Maß mit einer weiteren radial versetzten Überlaufkante (13;47) überragt, wobei der radiale Bereich zwischen den beiden Überlaufkanten (8,13;44,47) rinnenförmig ausgebildet ist und durch Drosselkanäle (36) mit dem Inneren des rohrförmigen Innenteils (10;43) in Verbindung steht.

14. Vorrichtung nach einem der vorhergehenden Ansprüche, dadurch gekennzeichnet, daß ein die Vorkammer (30) begrenzender Teil einen unter Erzeugung einer Pumpwirkung in der Vorkammer (30) elastisch verformbaren Wandabschnitt (28) aufweist und dem Auslauf (19a) ein selbsttätig schließendes, unter der Pumpwirkung jedoch selbsttätig öffnendes Auslaufventil zugeordnet ist.

15. Vorrichtung nach einem der Ansprüche 1 bis 13, dadurch gekennzeichnet, daß dem Auslauf (19a) eine zwischen einer eingeklappten Ruhestellung und einer ausgeschwenkten Auslaufstellung schwenkbare Auslauftülle (22) zugeordnet ist.

16. Vorrichtung nach Anspruch 15, dadurch gekennzeichnet, daß die schwenkbare Auslauftülle (22) zugleich als den Auslauf (19a) schließendes bzw. freigebendes Auslaufventil (23, 24) ausgebildet ist.

17. **Verfahren** zum Betreiben bzw. Handhaben der Entnahmeeinrichtung nach einem der vorhergehenden Ansprüche, bei dem - zwecks Reproduzierbarkeit der Abgabedosis bzw. des zurückbleibenden Volumenteils auch bei zur Neige gehendem Behälterinhalt-,
(a) der die Flüssigkeit oder den Wirkstoff enthaltende Behälter (1) gewendet wird, um den Wirkstoff zu einem bestimmten Teil, der durch das Volumen eines Kopfraumes (30,32;51,32) der Entnahmeeinrichtung definiert ist oder vom Restvolumen des Wirkstoffs im Behälter (1) begrenzt wird, aus dem Behälter (1) in die Entnahmevorrichtung zu überführen;
(b) der Behälter eine kurze Zeitspanne danach in die Ausgangslage gebracht wird, wobei ein vorgegebener und einstellbarer Volumenteil (19;45) des im
Kopfraum (30,32;51,32) befindlichen Wirkstoffs nicht in den Behälter zurückkehrt;
dadurch gekennzeichnet, daß
(c) ein Pufferspeicher (32) im Kopfraum einen weiteren Volumenteil zurückbehält, wenn der Behälter in die Ausgangslage gebracht wird;
(d) der weitere Volumenteil (32) den bereits im Kopfraum befindlichen Anteil des vorgegebenen, einstellbaren Volumenteils (19;45) ergänzt, so daß der letztere im Kopfraum verbleibt und der überschüssige Wirkstoff in den Behälter verzögert zurückkehrt.

18. Verfahren nach Anspruch 17, bei dem
der vorgegebene und eingestellte Volumenteil aus dem Kopfraum heraus abgegeben wird, sei es in Tropfenform oder als stetiges einmaliges Abgeben nach außen.

19. Verfahren nach Anspruch 18, bei dem
die Abgabe des voreingestellten Volumenteils über eine Auslaßtülle (22) erfolgt und durch Aufbringen von Druckpulsen - zwecks Tropfenbildung - veranlasst wird.

20. Verfahren nach Anspruch 17 bis 19, bei dem
der zurückbleibende einstellbare Volumenteil durch Verändern eines - insbesondere ringförmigen oder toroidförmigen - Dosiertaschenvolumens (19,45), vorzugsweise durch Verdrehen oder Verschieben an der Entnahmeeinrichtung, voreingestellt wird, wobei die Dosiertasche in der Tiefe und/oder Breite verändert wird.

21. Verfahren nach einem der Ansprüche 17 bis 20, bei dem eine Flüssigkeit als Wirkstoff abgegeben wird.

22. **Verfahren** zur Herstellung von Entnahmevorrichtung(en) nach einem der Ansprüche 1 bis 16, bei dem
(a) einem auf einen Behälter (1) aufsteckbaren oder schraubbaren Verschluß innenseitig eine Tasche (19,45) angefügt wird, die nach oben - zumindest teilweise - offen ist, wobei ein Durchgang (11) von der Aufsteck- oder Schraubseite zur Öffnung der Tasche verbleibt;
(b) vom tiefsten Punkt der Tasche (19;45) ausgehend eine Ableitung (22) nach außen geschaffen wird, die verschließbar ist oder deren äußerer Kanal (25) oberhalb des oberen Randes der nach oben offenen Tasche (19;45) endet;
(c) einem Feindosiervolumen bzw. Pufferspeicher (32) ein Abfluß (36) zum Behälter (1) zugeordnet wird, dessen Wirkstoff-Durchflußmenge (pro Zeit) gering gegenüber derjenigen Durchflußmenge (pro Zeit) ist, die über die Verbindung Pufferspeicher-Dosiertasche übertragbar ist.

23. Verfahren nach Anspruch 22, bei dem
(a) ein Verstellorgan an der Entnahmevorrichtung angeordnet wird, mittels welchem das Taschenvolumen (19;45) durch Verändern seines Bodens oder seines oberen Randes einstellbar ist; oder
(b) eine (werkseitige) Voreinstellung des Taschenvolumens (19;45) vorgenommen wird, das entsprechend der Viskosität und dem Abgabevolumen des Wirkstoffes bestimmt ist.

24. Verfahren nach Anspruch 22 oder 23, bei dem
der Pufferspeicher (32) oberhalb der Dosiertasche (19;45) angeordnet wird und mit der nach oben offenen Dosiertasche verbunden ist, wenn sich der Behälter (1) in seiner Ausgangslage befindet.

25. Verfahren nach einem der Ansprüche 22 bis 24, bei dem
(a) als Ableitung nach aüßen ein abklappbarer Abgaberüssel (22) an der Entnahmevorrichtung angeordnet wird, der über seinen Durchflußkanal (25) mit dem tiefsten Punkt der Dosiertasche (19;45) verbunden wird;
(b) der Abgaberüssel (22) so aüsgestaltet wird, daß er im abgeklappten Zustand den Durchfluß von der Dosiertasche (19;45) freigibt und in angeklapptem Zustand den Durchfluß sperrt;
(c) an der Entnahmevorrichtung ein Druckgeber (28) angebracht wird, über den der Innenraum von Behältnis und Entnahmevorrichtung manuell - pulsweise oder stetig - mit Luftdruck beaufschlagbar ist zur - tropfenförmigen oder stetigen - Wirkstoffabgabe.

## Claims

1. An apparatus for the reproducible withdrawal of an adjustable, particularly small, amount of a liquid from a container (1), such as a glass vial,
- having a pre-chamber (30; 51) which is in free flow communication with the interior of the container (1);
- having a measuring chamber (19; 45) of adjustable volume, which is separable therefrom (30; 51) as regards flow;
- having a closable outlet (21) for emptying the measuring chamber (19; 45);
- the volumes of the pre-chamber (30; 51) and the measuring chamber (19; 45) being variable in oppositely oriented fashion by relative adjustment of two parts (10, 15; 43, 41) confining the pre-chamber and the measuring chamber;
- one (10; 43) of the two parts (10, 15; 43, 41) being in free flow communication with the interior of the container (1) when the apparatus has been mounted and having an overflow edge (8; 47) - protruding freely into the pre-chamber (30; 51) - at its (10; 15) upper end,
characterized in that
- one part is a tubular inner part (10, 15) sealingly connected with the container (1, 2) in the mounted position;
- a precision dosing volume (32) is confined between measuring chamber (19; 45) and pre-chamber (30; 51), which has a flow communication to the container (1) for the dilatory return of liquid;
- the adjusted liquid amount (19; 45) can be withdrawn via the closable outlet without dismounting the apparatus from the container (1).

2. The apparatus according to claim 1, characterized in that the measuring chamber (19) is in free flow communication with the pre-chamber (30) and the precision dosing volume (32).

3. The apparatus according to claim 1 or 2, characterized in that, when the apparatus is mounted, the precision dosing volume (32), the pre-chamber (30; 51) and the inner volume of the container (1) adjoin one another at the overflow edge (8; 47) of one (10, 43) of the parts (10, 15; 43, 41) adjustable relative to each other.

4. The apparatus according to any one of claims 1 to 3, characterized in that the measuring chamber (19; 45) and the pre-chamber (30; 51) are developed and arranged within the apparatus such that in the apparatus mounted on the container the pre-chamber (30; 51) can be filled from the container interior only in a position of the container (1, 2), which is approximately upside-down or over-head, and the measuring chamber (19; 45) can be filled from the pre-chamber (30; 51) when the container (1, 2) is returned to the approximately normal position.

5. The apparatus according to claim 4, characterized in that means (12, 13, 36; 46; 60-62) are provided to supply the liquid preferably into the measuring chamber (19; 45) when the container is returned to the approximately normal position.

6. The apparatus according to any one of claims 1 to 5, characterized in that one (15) of the two parts (10, 15) adjustable relative to each other includes the closable outlet (19a; 48) and, in the region of the outlet, it has a bottom element (18; 42) confining the measuring chamber (19; 45) downwardly and abutting sealingly and slidingly against the other part (10; 43).

7. The apparatus according to claim 6, characterized in that the bottom element (42) extends from the outlet point (48) in an upwardly sloping fashion.

8. The apparatus according to any one of the preceding claims, characterized in that the other part (15; 41) of the two parts (10, 15; 43, 41) movable relative to each other is a cap-like part having a cap bottom (28) and a cap wall (20) and protruding from the inner part at a radial distance, which part is adjustable in the axial direction relative to the inner part (10).

9. The apparatus according to claims 7, characterized in that opposite the overflow edge (47) there is arranged a displacer body (61, 62) at the cap bottom (60), which protrudes into the pre-chamber (51).

10. The apparatus according to any one of the preceding claims; characterized in that the cap bottom (28; 60) is flexible.

11. The apparatus according to any one of the preceding claims, characterized in that the cap bottom is developed as a resilient pumping membrane (28, 60).

12. The apparatus according to claims 5 and 9 in combination with claim 10 or 11, characterized in that the displacer body (61) is developed as - particularly resiliently deformable (62) - closing body for temporarily closing the end, including the overflow edge (47), of the tubular inner part (43).

13. The apparatus according to any one of the preceding claims, characterized in that at the upper end of the tubular inner part (10; 43) a - particularly exchangeable - sleeve or bush (12; 46) is provided which protrudes from the overflow edge (8; 44) of the inner part (10; 43) by a predetermined measure thereby forming the precision dosing volume (32) - by another radially displaced overflow edge (13; 47), the radial region between the two overflow edges (8, 13; 44, 47) being developed like a groove and communicating with the interior of the tubular inner part (10; 43) through throttle channels (36).

14. The apparatus according to any one of the preceding claims, characterized in that a part confining the pre-chamber (30) has a wall section (28) resiliently deformable by generating a pumping action in the pre-chamber (30) and an automatically closing outlet valve, which opens automatically when the pumping action is exerted, is assigned to the outlet (19a).

15. The apparatus according to any one of claims 1 to 13, characterized in that an outlet nozzle (22) pivotable between a flapped rest position and a swung-out outlet position is assigned to the outlet (19a).

16. The apparatus according to claim 15, characterized in that the pivotable outlet nozzle (22) is simultaneously developed as an outlet valve (23, 24) closing and releasing, respectively, the outlet (19a).

17. A process for operating and handling, respectively, the withdrawal means according to any one of the preceding claims, in which - for the purpose of reproducing the withdrawal dose and the remaining volume portion, respectively, even if the container contents run low -,
(a) the container (1) containing the liquid or the active substance is turned to supply the active substance in a predetermined portion which is defined by the volume of a top space (30, 32; 51, 32) of the withdrawal means or confined by the residual volume of the active substance in the container (1), from the container (1) into the withdrawal apparatus;
(b) the container is returned to the initial position shortly afterwards, a predetermined and adjustable volume portion (19; 45) of the active substance in the top space (30, 32; 51, 32) not returning to the container;
characterized in that
(c) a buffer storage (32) retains another volume portion in the top space when the container is returned to its initial position;
(d) the other volume portion (32) supplements the portion of the predetermined adjustable volume portion (19; 45), which is already in the top space, so that the latter portion remains in the top space and the excess active substance returns to the container with a delay.

18. The process according to claim 17, in which the predetermined and adjusted volume portion is dispensed from the top space either in the form of drops or as a permanent single supply to the outside.

19. The process according to claim 18, in which the dispense of the pre-adjusted volume portion is effected via an outlet nozzle (22) and induced by applying pressure pulses - for the purpose of drop formation.

20. The process according to claims 17 to 19, in which the retaining adjustable volume portion is pre-adjusted by varying a dosing bag volume (19, 45) - which is particularly annular or toroidal -, preferably by turning or moving the withdrawal means, the dosing bag being varied as regards depth and/or width.

21. The process according to any one of claims 17 to 20, in which a liquid is dispensed as the active substance.

22. The process for the production of withdrawal apparatus(es) according to any one of claims 1 to 16, in which
(a) a bag (19, 45) is attached to the inner side of a closure which can be fixed on or screwed onto a container (1), which bag is upwardly - at least partially - open, a passage (11) remaining from the fix-on or screw side to the opening of the bag;
(b) a by-pass (22), starting from the lowest point of the bag (19; 45), is established to the outside, which can be closed or whose outer channel (25) terminates above the upper edge of the upwardly open bag (19; 45);
(c) an outlet (36) to the container (1) is assigned to a precision dosing volume and buffer storage (32), respectively, whose active substance flow rate (per time) is minor as compared to the flow rate (per time) which can be transferred via the connection of buffer storage - dosing bag.

23. The process according to claim 22, in which
(a) an adjusting means is fixed on the withdrawal means by which the bag volume (19; 45) can be adjusted by varying its bottom or its upper edge; or
(b) a pre-adjustment of the bag volume (19; 45) is made (by the manufacturer), which is determined on the basis of the viscosity and the dispensing volume of the active substance.

24. The process according to claim 22 or 23, in which the buffer storage (32) is arranged above the dosing bag (19; 45) and is connected with the upwardly open dosing bag when the container (1) is in its initial position.

25. The process according to any one of claims 22 to 24, in which
(a) a swinging-out dispensing nozzle (22) is fixed on the withdrawal apparatus as a discharge to the outside, which is connected with the lowest point of the dosing bag (19; 45) via its flow channel (25);
(b) the dispensing nozzle (22) is equipped such that it releases the flowing-through from the dosing bag (19; 45) in the swung-out position and blocks the flowing-through in the flapped position;
(c) a pressure transducer (28) is attached to the withdrawal apparatus, via which air pressure can be admitted - pulse-wise or constantly - in manual fashion into the interior of container and withdrawal apparatus - to effect - drop-wise or constant - active substance release.

## Revendications

1. Dispositif pour le prélèvement reproductible d'une quantité réglable, notamment petite, d'un liquide hors d'un récipient (1), comme des bouteilles en verre,
- comportant une préchambre (30;51) en rapport d'écoulement libre avec l'intérieur du récipient (1);
- comportant une chambre de mesure (19;45) d'un volume réglable pouvant être séparée de cette dernière (30;51) suivant l'écoulement;
- comportant une sortie (21) pouvant être fermée pour vider la chambre de mesure (19;45);
- les volumes de la préchambre (30;51) et de la chambre de mesure (19;45) pouvant être modifiés en sens opposé par le déplacement relatif de deux parties (10,15;43,41) délimitant la préchambre et la chambre de mesure;
- l'une (10;43) des deux parties (10,15;43,41) étant, à l'état monté du dispositif, en contact d'écoulement libre avec l'intérieur du récipient (1) et présentant au niveau de son extrémité supérieure (10;15) un bord-déversoir (8;47) - pénétrant librement à l'intérieur de la préchambre (30;51),
caractérisé en ce que
- ladite partie est une partie intérieure tubulaire (10, 15), qui est reliée de manière calfeutrante au récipient (1,2) en position montée;
- un volume de dosage précis (32) est délimité entre la chambre de mesure (19;45) et la préchambre (30;51), qui présente un rapport d'écoulement avec le récipient (1) pour le retour retardé du liquide;
- la quantité de liquide réglée (19;45) peut être prélevée sans démonter le dispositif du récipient (1) via la sortie pouvant être fermée.

2. Dispositif selon la revendication 1, caractérisé en ce que la chambre de mesure (19) est en rapport d'écoulement libre avec la préchambre (30) et le volume de dosage précis (32).

3. Dispositif selon la revendication 1 ou 2, caractérisé en ce que le volume de dosage fin (32), la préchambre (30;51) et le volume intérieur du récipient (1) se délimitent les uns les autres lorsque le dispositif est monté sur le bord-déversoir (8;47) de l'une (10;43) des parties (10,15;43,41) pouvant être déplacées l'une par rapport à l'autre.

4. Dispositif selon l'une des revendications 1 à 3, caractérisé en ce que la chambre de mesure (19;45) et la préchambre (30;51) sont conçues et disposées dans le dispositif de telle sorte que, dans le dispositif monté sur le récipient, on peut remplir la préchambre (30;51) à partir de l'intérieur du récipient seulement dans une position du récipient (1, 2) proche de la position au-dessus de la tête et la chambre de mesure (19;45) à partir de la préchambre (30;51) lors du retour du récipient (1,2) presque en position normale.

5. Dispositif selon la revendication 4, caractérisé en ce que des moyens (12,13,36;46;60 à 62) sont prévus pour conduire le liquide de préférence dans la chambre de mesure (19;45) lors du retour du récipient à peu près dans la position normale.

6. Dispositif selon l'une des revendications 1 à 5, caractérisé en ce que l'une (15) des deux parties pouvant être déplacées l'une par rapport à l'autre (10,15) présente la sortie pouvant être obturée (19a;48) et, dans la zone de la sortie, un élément de fond (18;42) délimitant la chambre de mesure (19;45) vers le bas et agissant sur l'autre partie (10;43) de manière calfeutrante et coulissante.

7. Dispositif selon la revendication 6, caractérisé en ce que l'élément de fond (42) suit une trajectoire montant obliquement à partir de l'emplacement de la sortie (48).

8. Dispositif selon l'une des revendications précédentes, caractérisé en ce que l'autre partie (15; 41) des deux parties (10, 15; 43, 41) pouvant être déplacées l'une par rapport à l'autre est une partie, surplombant la partie intérieure à une distance radiale, en cuvette avec un fond de cuvette (28) et une enveloppe de cuvette (20), qui peut être déplacé en direction axiale par rapport à la partie intérieure (10).

9. Dispositif selon la revendication 7, caractérisé en ce qu'un corps volumétrique (61, 62) entrant dans la préchambre (51) est placé en face du bord-déversoir (47) sur le sol de cuvette (60).

10. Dispositif selon l'une des revendications précédentes, caractérisé en ce que le fond de cuvette (28; 60) est conçu de manière flexible.

11. Dispositif selon l'une des revendications précédentes, caractérisé en ce que le fond de cuvette est conçu comme une membrane de pompe élastique (28, 60).

12. Dispositif selon les revendications 5 et 9 en liaison avec les revendications 10 ou 11, caractérisé en ce que le corps volumétrique (61) est conçu comme un corps de fermeture - notamment déformable élastiquement (62) - pour obturer provisoirement l'extrémité de la partie intérieure tubulaire (43) présentant le bord-déversoir (47).

13. Dispositif selon l'une des revendications précédentes, caractérisé en ce que, au niveau de l'arête supérieure de la partie intérieure tubulaire (10;43), est prévue une douille ou une socquette (12;46) - notamment remplaçable - qui domine le bord-déversoir (8;44) de la partie intérieure (10;43) en formant le volume de dosage précis (32) d'une distance prédéterminée avec un autre bord-déversoir déplacé radialement (13;47), la zone radiale entre les deux bords-déversoirs (8,13;44,47) formant une rigole et étant en contact avec l'intérieur de la partie intérieure tubulaire (10;43) via des canaux d'étranglement (36).

14. Dispositif selon l'une des revendications précédentes, caractérisé en ce qu'une partie délimitant la préchambre (30) présente une partie murale (28) déformable élastiquement en produisant un effet de pompe dans la préchambre (30) et qu'une soupape de décharge fermant automatiquement, mais s'ouvrant automatiquement sous l'effet de pompe est affectée à l'orifice de décharge (19a).

15. Dispositif selon l'une des revendications 1 à 13, caractérisé en ce qu'un verseur de décharge (22) oscillant entre une position de repos repliée et une position de sortie pivotée est affecté à l'orifice de décharge (19a).

16. Dispositif selon la revendication 15, caractérisé en ce que le videur de décharge pivotant (22) est en même temps conçu comme soupape de décharge (23, 24) fermant ou ouvrant l'orifice de décharge (19a).

17. Procédé pour l'actionnement ou la manipulation du dispositif de prélèvement selon l'une des revendications précédentes, dans lequel - à des fins de reproductibilité de la dose de sortie ou de la partie du volume restante même lorsque le contenu du récipient touche à sa fin -
(a) le récipient (1) contenant le liquide ou la matière active est retourné pour conduire la matière active à une partie donnée, qui est définie par le volume d'un espace de tête (30,32;51,32) du dispositif de prélèvement ou délimitée par le volume de matière active restant, du récipient (1) dans le dispositif de prélèvement;
(b) le récipient est amené dans une position de départ peu de temps après, une partie du volume prédéterminée et réglable (19;45) de la matière active se trouvant dans l'espace de tête (30,32;51,32) ne retournant pas dans le récipient;
caractérisé en ce que
(c) un réservoir d'accumulation (32) retient une autre partie du volume dans l'espace de tête, lorsque le récipient est amené dans la position de départ;
(d) la partie du volume restante (32) complète la partie du volume prédéterminée et réglable (19;45) se trouvant déjà dans l'espace de tête, de sorte que cette dernière demeure dans l'espace de tête et que l'excédent de matière active retourne de manière retardée dans le récipient.

18. Procédé selon la revendication 17, dans lequel la partie du volume prédéterminée et réglée sort de l'espace de tête, que ce soit sous forme de gouttes ou de déversement unique constant à l'extérieur.

19. Procédé selon la revendication 18, dans lequel le déchargement de la partie du volume préréglée s'effectue via un verseur de décharge (22) et est provoqué par la transmission de pulsions de pression - afin de former des gouttes.

20. Procédé selon les revendications 17 à 19, dans lequel la partie du volume réglable restante est préréglée en modifiant un volume de la poche de dosage (19, 45) - notamment annulaire ou toroïdal - de préférence en tournant ou déplaçant le dispositif de prélèvement, la poche de dosage étant modifiée en profondeur et/ou en largeur.

21. Procédé selon l'une des revendications 17 à 20, dans lequel un liquide est déchargé en tant que matière active.

22. Procédé pour la fabrication d'un (de) dispositif(s) de prélèvement selon l'une des revendications 1 à 16, dans lequel
(a) une poche (19, 45) est disposée du côté intérieur d'une fermeture s'attachant ou se vissant sur un récipient (1), qui est ouverte - au moins partiellement - vers le haut, un passage (11) restant entre le côté d'attache ou de vissage et l'ouverture de la poche;
(b) une dérivation (22), partant du point le plus bas de la poche (19 45), est créée vers l'extérieur, qui peut être fermée ou dont le canal extérieur (25) prend fin au-dessus de l'extrémité supérieure de la poche (19;45) ouverte vers le haut;
(c) un déchargeoir (36) relié au récipient (1) est affecté à un volume de dosage précis ou un réservoir d'accumulation (32), dont la quantité de passage de matière active (par temps) est faible par rapport à la quantité de passage (par temps) qui peuvent être transmise via la connexion entre le réservoir d'accumulation et la poche de dosage.

23. Procédé selon la revendication 22, dans lequel
(a) un organe de réglage est installé sur le dispositif de prélèvement, au moyen duquel le volume de la poche (19;45) peut être réglé en modifiant son fond ou son extrémité supérieure; ou
(b) on procède à un préréglage (en usine) du volume de la poche (19;45), qui est défini en fonction de la viscosité et du volume de sortie de la matière active.

24. Procédé selon la revendication 22 ou 23, dans lequel le réservoir d'accumulation (32) est placé au-dessus de la poche de dosage (19;45) et est relié à la poche de dosage ouverte vers le haut, lorsque le récipient (1) se trouve dans sa position de départ.

25. Procédé selon l'une des revendications 22 à 24, dans lequel
(a) un museau de sortie rabattant (22) est placé sur le dispositif de prélèvement en tant que dérivation vers l'extérieur, qui est relié au point le plus bas de la poche de dosage (19; 45) via son canal d'écoulement (25);
(b) le museau de sortie (22) est conçu de telle manière qu'il permet l'écoulement de la poche de dosage (19;45) à l'état rabattu et bloque l'écoulement à l'état non rabattu;
(c) un indicateur de pression (28) est monté sur le dispositif de prélèvement, permettant d'injecter une pression d'air manuellement - par pulsions ou en continu - à l'intérieur du récipient et du dispositif de prélèvement, afin que la matière active sorte - sous forme de gouttes ou de manière continue.
